## Europäisches Patentamt

(19)    **European Patent Office**

**Office européen des brevets**

(11) Publication number: **0 255 393**
**B1**

(12)    # EUROPEAN PATENT SPECIFICATION

(45) Date of publication of the patent specification:
19.09.90

(21) Application number: **87306783.9**

(22) Date of filing: **30.07.87**

(51) Int. Cl.⁵: **F16L 33/20**

(54)    **Hose coupling.**

(30) Priority: **01.08.86 GB 8618813**
**18.09.86 GB 8622474**

(43) Date of publication of application:
**03.02.88 Bulletin 88/5**

(45) Publication of the grant of the patent:
**19.09.90 Bulletin 90/38**

(84) Designated Contracting States:
**AT BE CH DE ES FR GB GR IT LI LU NL SE**

(56) References cited:
**EP-A- 0 163 386**
**CH-A- 321 238**
**DE-A- 1 450 408**
**US-A- 4 212 487**

(73) Proprietor: **GATES HYDRAULICS LIMITED, Station Road, St. Neots Cambridgeshire(GB)**

(72) Inventor: **Knight, Colin Harland, 1 The Causeway, Carlton Bedford(GB)**
Inventor: **Keast, Geoffrey Richard, 4 Field Close, Buckden Cambridgeshire(GB)**

(74) Representative: **Carpmael, John William Maurice et al, CARPMAELS & RANSFORD 43 Bloomsbury Square, London, WC1A 2RA(GB)**

## Description

This invention relates to couplings of the insert ferrule type for attachment to reinforced, flexible hose. Couplings that are post assembled to a hose typically include an insert which inserts into a hose end and a ferrule that is concentric with the insert which together define an annular cavity for encircling the hose end. The coupling is retained on the hose end by pinching the hose end between the ferrule and insert. Pinching is accomplished by either radially reducing the ferrule or radially increasing the insert.

In high pressure hose applications, it is necessary to latch the ferrule to the insert. In many coupling designs, the ferrule has an internal collar that extends behind an external collar of the insert.

Hose inserts have a fitting end portion, a hose end portion, and an intermediate locking collar for the ferrule. The fitting end portion may have any suitable fitting configuration. As examples, the fitting end portion may be configured with male pipe threads, an external collar that retains a female or male swivel nut, or a tubular extension that terminates into an O-ring retaining flange. The present invention is concerned with the type that have an external collar for retaining a swivel nut.

Traditionally, the coupling is formed of several individual parts for economical reasons or to accommodate various fitting configurations. However, assembly of several parts may introduce performance problems. For example, the swivel nut may be attached to the stem by crimping a portion of it over an external collar. The so crimped portion is subject to bending or deformation when the fitting is attached to another part or when the hose is subjected to high pressure. Such bending or deformation of the crimped nut portion may cause leakage making such a fitting unsuitable for some applications.

U.S.Patent No.2926029 to St.Clair et al, shows a two-piece hose insert where the ferrule locking collar is made as an integral part of the fitting end portion. A nipple is partially inserted into the fitting end and brazed to form a hose end portion. The problem with an insert of this type is that any failure of the brazed joint subjects the coupling to leakage.

Another example of the multi-piece insert is the type where a locking collar is formed as an integral part of the hose end portion. A tubular extension that terminates into an O-ring retaining flange is partially inserted into the hose end portion and brazed thereto. Like the previous example, the problem with such an insert is that any failure of the brazed joint subjects the assembled coupling to leakage.

To overcome the problem of using a crimped on swivel nut, slip on nuts have been proposed, and one such coupling is disclosed in EP-A-0 151 017. This coupling relies upon a screw-on or crimped-on retaining sleeve behind the swivel nut, to hold the nut in place, and a retaining latch for the ferrule is formed on the exterior of this sleeve. This means that a special sleeve has to be machined for attachment to the insert, which makes the coupling expensive. Also, because the latch is formed on a separate sleeve, failure can occur.

The present invention seeks to provide an improved hose coupling which does not suffer from the above disadvantages.

According to the present invention, we provide a hose coupling comprising a ferrule, a nut having an internal shoulder thereon, and an insert, said insert comprising: a portion at one end thereof adapted to be received in an end portion of a hose (H); a shoulder at the other end thereof for engaging said internal shoulder on said nut, whereby said nut can be slipped onto said insert from only said one end thereof; and a central portion (C) provided with latch means for engaging a latching collar on an end of said ferrule following a crimping operation which results in the hose end portion being trapped between said ferrule and said insert, characterised in that a retaining device is provided to hold said nut at said other end of said insert and to position said ferrule in the correct plane prior to the crimping operation.

Preferably, the retaining device comprises a spring clip which engages in a recess in said other end portion of the insert, on the side of the shoulder adjacent the said central portion of the insert.

It is preferred that the spring clip be of generally T-shaped cross-section. Preferably, the stem of the 'T' fits snugly into the recess, and the cross-bar of the 'T' is symmetrical, with each arm thereof equal in length to the distance between the edge of the recess and that of the latch means, so that when located in position, a side face of the spring clip is in line with a solid face of a groove forming part of said latch means.

Preferably, the spring clip subtends an arc of about 315°, with its two leading edge portions being of reduced section to enable the clip easily to be slipped onto the insert for engagement in its recess.

By using a slip-on nut, a hardier construction than is the case with a crimp-on nut is achieved. Also, using a slip-on nut design allows the use of forging techniques which make the component considerably less expensive. Secondly, using a spring clip and slip-on nut reduces the overall diameter of the insert and allows smaller bar stock to be utilised. Lastly, the clip not only retains the nut in the correct position but allows the nut to be used to push the insert fully home on the hose and locates the ferrule above the retaining latch prior to crimping. Without the clip the nut would slide forward and push the ferrule into position but not the insert.

It will be appreciated that the retaining device of this invention may be such as to be removable from the assembly after crimping, without detriment to the integrity of the crimped joint.

A preferred embodiment of the invention is now described by way of example with reference to the accompanying drawings, in which:

Figure 1 is a longitudinal half section of a known hose coupling insert incorporating a crimp-on nut;

Figure 2 is a view similar to Figure 1 but showing a first embodiment of an insert of a coupling of the invention,

Figure 3 is a further longitudinal half section of the coupling of Figure 2 being assembled with an end of a hose;

Figure 4 is an end view of the insert of Figure 3, showing how the spring clip is located thereon.

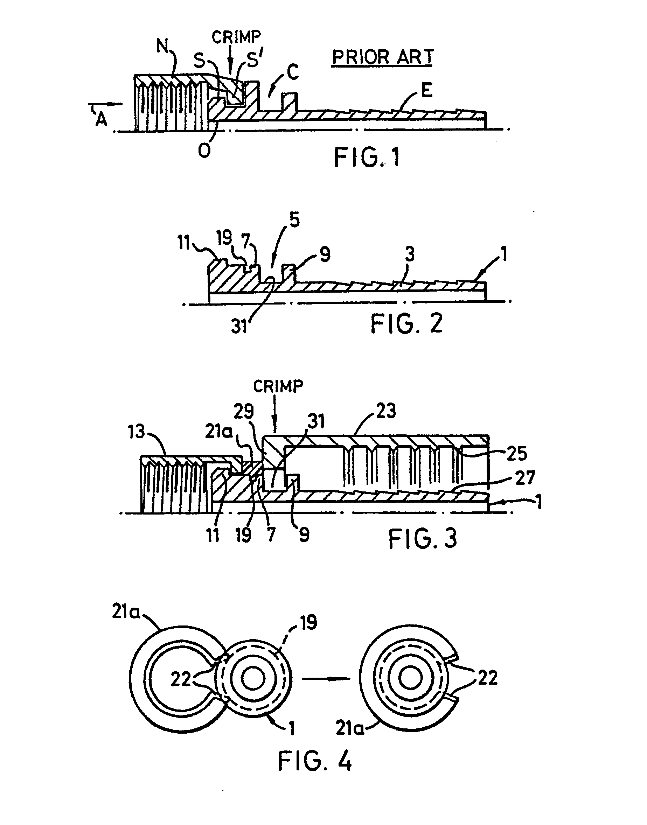

Referring first to Figure 1, an insert of a known type of coupling is illustrated, the insert having an end portion E which is pushed into the end of a hose, a central portion C provided with latching means with which a ferrule (not shown) is engageable, and an opposite end portion O provided with an external shoulder S with which an internal shoulder S, on a swivel nut N is engaged after the nut N has been assembled on the insert in the direction of the arrow A and crimped in position. This type of insert and crimped-on swivel nut N can sometimes fail under high pressure because the crimped-on nut N can bend or deform. Furthermore, the insert has to be machined from relatively large diameter bar stock, the diameter of which is dictated by the outside diameter of the latching steps on the central portion C of the insert.

Referring now to Figures 2 and 3, the hose coupling of the present invention has an insert 1 with a serrated end portion 3 which can be identical to the prior art end portion E and which is adapted to form a push fit inside an end portion of a reinforced hose H (see Figure 3). As in the prior art construction, the insert is provided with ferrule latching means 5 comprising two axially spaced circumferential ribs 7 and 9. The diameter of these ribs 7 and 9 can be considerably less than that of the two latching ribs shown in the prior art construction of Figure 1 for the same diameter end portion.

At its end remote from the end portion 3, the insert of the present invention is provided with a circumferential shoulder 11 which defines the maximum outside diameter of the insert. This maximum diameter can correspond with the diameter of the shoulder S on the prior art insert, that is, it is considerably less than that of the latching ribs shown at C and the effect of this is that the insert can be machined from bar stock whose outside diameter is less than that of the prior art insert shown in Figure 1.

As can be seen from Figure 3, the insert 1 is used with a slip-on nut 13 which is assembled on the insert over the end portion 3 in the direction of the arrow 15, the nut being provided with an internal shoulder 17, the internal diameter of which is somewhat less than the external diameter of the shoulder 11 on the insert so as to prevent the nut 13 from moving off the end of the insert remote from its end portion 3. A circumferential groove 19 is formed in the circumference of the insert 1 between its shoulder 11 and the rib 7 so that once the nut 13 has been slipped onto the insert it can be held in its operative position by means of a spring clip 21a. Once the clip 21a is located in the groove 19 the nut 13 is held captive between the shoulder 11 and clip 21a but is able to swivel around the longitudinal axis of the coupling. A nut with a female thread is illustrated but equally a nut with a male thread could be used.

To complete the coupling, a ferrule 23 of generally known construction is provided, the ferrule 23 having a serrated interior 25 which co-operates with serrations 27 on the end portion 3 of the insert to grip the hose H. The ferrule 23 also has an internal collar 29 at its leading end which engages in a groove 31 defined by the ribs 7 and 9 when the ferrule 23 is crimped into position to sandwich the hose between its internal serrations 25 and its external serrations 27 on the insert. (Instead of crimping the ferrule 23 radially inwardly, it is envisaged that it might be possible to crimp or expand the end portion 3 of the insert 1 radially outwardly).

Referring now to Figures 3 and 4, in which a special T-shaped spring clip 21a is used. The stem of the T fits into the groove or recess 19 to hold the clip in position, and the clip has a symmetrical cross-bar, each arm of which has a length corresponding to the width of the rib 7, so as completely to mask the rib 7. This means that the edge face of the cross-bar, regardless of which way round the clip 21a is fitted, will line up radially with the face of the rib 7 facing the groove 31, and as a result there is no step defined by the side of the clip 21a and the top of the rib 7.

As can be seen from Figure 4, the leading edges of the cross-bar of the T at the free ends of the arcuate clip 21a are stopped short of the ends of the clip (which subtends an arc of about 315°). This leaves two projecting portions 22 of the same width as the stem of the T, which portions can easily be located in the groove or recess 19 to assist in fitting the clip 21a.

It will thus be appreciated that the spring clip 21a, as well as maintaining the slip-on nut 13 in position on the insert, also performs the secondary function of ensuring that the insert 1 is pushed fully home within the hose, and that the ferrule is properly located with its collar 29 located in line with the groove between the ribs 7 and 9 prior to the crimping operation.

It will thus be appreciated that because the nut 13 does not have to be able to withstand crimping, it can be manufactured by a forging technique with resultant cost savings. Furthermore, by using the slip-on nut with a spring clip or other retaining means, the overall diameter of the insert 1 can be kept to a minimum since the overall diameter of the insert 1 can be kept to a minimum since the overall diameter of the insert is dictated by the outside diameter of the shoulder 11 rather than one of the latching ribs 7 or 9. Thus, reduced diameter bar stock can be used for machining the insert 1 with a further reduction in cost.

It will of course be understood that the present invention has been described above purely by way of example and modifications of detail can be made within the scope of the invention.

## Claims

1. A hose coupling comprising a ferrule (23), a nut (13) having an internal shoulder (17) thereon, and an insert (1), said insert comprising: a portion (3) at one end thereof adapted to be received in an end portion of a hose (H); a shoulder (11) at the other end thereof for engaging said internal shoulder (17) on said nut (13), whereby said nut (13) can be slipped onto said insert (1) from only said one end thereof; and a central portion (C) provided with latch means (7, 9) for engaging a latching collar (29) on an end of said ferrule (23) following a crimping operation which results in the hose end portion being trapped between said ferrule (23) and said insert (1), characterised in that a retaining device (21a) is provided to hold said nut (13) at said other end of said insert (1) and to position said ferrule (23) in the correct plane prior to the crimping operation.

2. A hose coupling according to claim 1 characterised in that said retaining device (21a) comprises a spring clip.

3. A hose coupling according to claim 2 characterised in that said spring clip (21a) has a generally T-shaped cross-section (Figure 4).

4. A hose coupling according to claim 3 characterised in that the stem of the T fits into a recess (19) in the circumference of said insert (1).

5. A hose coupling according to claim 3 or 4 characterised in that the cross-bar of the T is symmetrical, and each arm of the cross-bar has a length such that its outer face is in line with an internal face of a groove (e.g. 31) on the insert (1) forming part of said latch means (7, 9).

6. A hose coupling according to any one of the preceding claims, characterised in that the maximum outside diameter of said insert is at said shoulder (11), said latch means (7, 9) being of a smaller diameter.

**Patentansprüche**

1. Schlauchkupplung mit einer Zwinge (23), einer Mutter (13) mit einer daran ausgebildeten inneren Schulter (17) und einem Einsatz (1), der folgendes aufweist: ein an einem Ende des Einsatzes vorgesehenes Teil (3), das von einem Endstück eines Schlauches (H) aufgenommen werden kann; eine am anderen Ende des Einsatzes ausgebildete Schulter (11), zum Angreifen an der inneren Schulter (17) der Mutter (13), wodurch die Mutter (13) auf den Einsatz (1) nur von dem einen Ende her aufgeschoben werden kann; und ein Mittelteil (C) mit Rasteinrichtungen (7, 9) zum Zusammengreifen mit einem an einem Ende der Zwinge (23) befindlichen Rastwulst (29) im Anschluß an einen Bördelvorgang, worauf das Schlauchendteil zwischen der Zwinge (23) und dem Einsatz (1) geklemmt ist, dadurch gekennzeichnet, daß eine Rückhaltevorrichtung (21a) zum Zurückhalten der Mutter (13) am anderen Ende des Einsatzes (1) und zum Positionieren der Zwinge (23) in der richtigen Ebene vor dem Bördelvorgang vorgesehen ist.

2. Schlauchkupplung nach Anspruch 1, dadurch gekennzeichnet, daß die Rückhaltevorrichtung (21a) eine Federklemme aufweist.

3. Schlauchkupplung nach Anspruch 2, dadurch gekennzeichnet, daß die Federklemme (21a) einen im wesentlichen T-förmigen Querschnitt hat (Figur 4).

4. Schlauchkupplung nach Anspruch 3, dadurch gekennzeichnet, daß der vertikale Teil des T in eine Aussparung (19) im Umfang des Einsatzes (1) paßt.

5. Schlauchkupplung nach Anspruch 3 oder 4, dadurch gekennzeichnet, daß der horizontale Teil des T symmetrisch ist und daß jeder Arm des horizontalen Teils eine derartige Länge aufweist, daß seine Außenseite in einer Linie mit einer Innenseite einer an dem Einsatz (1) ausgebildeten Nut (z.B. 31) liegt, die einen Teil der Rasteinrichtung (7, 9, bildet.

6. Schlauchkupplung nach einem der vorhergehenden Ansprüche, dadurch gekennzeichnet, daß sich der maximale Außendurchmesser des Einsatzes an der Schulter (11) befindet und die Rasteinrichtung (7, 9, von geringerem Durchmesser ist.

**Revendications**

1. Raccord de tuyau comprenant une virole (23), un écrou (13) portant un épaulement intérieur (17), et un élément rapporté (1), ledit élément rapporté comprenant : une partie (3), à une première extrémité conçue pour être reçue dans une partie extrême d'un tuyau (H) ; un épaulement (11) à l'autre extrémité pour s'enclencher avec ledit épaulement intérieur (17) sur ledit écrou (13), de manière que ledit écrou (13) puisse être glissé sur ledit élément rapporté (1) uniquement à partir de ladite première extrémité de cet élément rapporté ; et une partie centrale (C) munie de moyens (7, 9) de verrouillage destinés à s'enclencher avec une collerette (29) de verrouillage sur une extrémité de ladite virole (23), suivant une opération de sertissage qui aboutit à ce que la partie extrême du tuyau soit emprisonnée entre ladite virole (23) et ledit élément rapporté (1), caractérisé en ce qu'un dispositif (21a) de retenue est prévu pour maintenir ledit écrou (13) à ladite autre extrémité dudit élément rapporté (1) et pour positionner ladite virole (23) dans le plan correct avant l'opération de sertissage.

2. Raccord de tuyau selon la revendication 1, caractérisé en ce que ledit dispositif (21a) de retenue comprend un anneau d'attache à ressort.

3. Raccord de tuyau selon la revendication 2, caractérisé en ce que l'anneau d'attache du ressort (21a) présente une section transversale de forme globalement en T (figure 4).

4. Raccord de tuyau selon la revendication 3, caractérisé en ce que la jambe du T s'ajuste dans un évidement (19) de la circonférence dudit élément rapporté (1).

5. Raccord de tuyau selon la revendication 3 ou 4, caractérisé en ce que la barre transversale du T est symétrique, et chaque branche de la barre transversale a une longueur telle que sa face extérieure est en ligne avec une face intérieure d'une gorge (par exemple 31) située sur l'élément rapporté (1) faisant partie desdits moyens de verrouillage (7, 9).

6. Raccord de tuyau selon l'une quelconque des revendications précédentes, caractérisé en ce que le diamètre extérieur maximal dudit élément rapporté est situé audit épaulement (11), lesdits moyens de verrouillage (7, 9) étant d'un diamètre inférieur.

N CRIMP
S S' C PRIOR ART
E
A
O
FIG. 1

11 19 7 5 9 3 1
31 FIG. 2

CRIMP
29 23
13 21a 31 25
27
1
11 19 7 9 FIG. 3

21a 19
22 22
1
21a
FIG. 4